(19) **Europäisches Patentamt**
**European Patent Office**
**Office européen des brevets**

(11) **EP 4 236 598 A1**

(12) **EUROPEAN PATENT APPLICATION**
published in accordance with Art. 153(4) EPC

(43) Date of publication:
**30.08.2023  Bulletin 2023/35**

(21) Application number: **20958259.2**

(22) Date of filing: **22.10.2020**

(51) International Patent Classification (IPC):
**H04W 76/28** (2018.01)

(52) Cooperative Patent Classification (CPC):
**H04W 76/28; Y02D 30/70**

(86) International application number:
**PCT/CN2020/123006**

(87) International publication number:
**WO 2022/082677 (28.04.2022 Gazette 2022/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventors:
• **JI, Pengyu**
  **Beijing 100027 (CN)**

• **LI, Guorong**
  **Beijing 100027 (CN)**
• **ZHANG, Jian**
  **Beijing 100027 (CN)**
• **WANG, Xin**
  **Beijing 100027 (CN)**
• **ZHANG, Lei**
  **Beijing 100027 (CN)**

(74) Representative: **Haseltine Lake Kempner LLP**
**Cheapside House**
**138 Cheapside**
**London EC2V 6BJ (GB)**

(54) **SIDELINK DISCONTINUOUS RECEPTION METHOD AND APPARATUS**

(57)    Embodiments of this disclosure provide a sidelink discontinuous reception method and apparatus. The method includes: receiving, by a first terminal equipment, first sidelink control information transmitted by a second terminal equipment, the first sidelink control information indicating a reserved resource used for retransmission after a slot where the first sidelink control information is located; and being, by the first terminal equipment, in an active state or an on state in a sidelink at a slot where the reserved resource is located.

**Fig. 2**

**Description**

Technical Field

This disclosure relates to the field of communications technologies.

Background

In Vehicle to Everything (V2X) communications of Rel-15 and its previous versions, there are two allocation methods supporting a sidelink resource: Mode 1 and Mode 2. For Mode 1, a side link resource is obtained through allocation by a network device (such as a base station); For Mode 2, the terminal equipment autonomously selects a transmission resource, that is, the transmission resource is obtained by a process of sensing (or detection)-resource selection.

On the other hand, New Radio (NR) V2X is one of the current research projects of Rel-16 standardization, and compared with Long Term Evolution (LTE) V2X, in NR V2X, it is required to support many new scenarios and new traffics (such as remote driving, automatic driving, and fleet driving), and higher technical indicators (high reliability, low delay, high data rate, etc.) needs to be met.

The physical channels defined by NR V2X include physical sidelink control channel (PSCCH), physical sidelink shared channel (PSSCH) and physical sidelink feedback channel (PSFCH). PSCCH carries the first stage (1st stage) sidelink control information (SCI), the 1st stage SCI being mainly used to reserve a resource. PSSCH carries the second stage (2nd stage) SCI and a transport block, the 2nd stage SCI being mainly used for TB demodulation. PSFCH carries sidelink feedback information (also be referred to as HARQ-ACK). A resource (time-frequency resource) used by sidelink transmission is located in a certain resource pool.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

It was found by the inventors that according to WID (work item description) of Rel-17 V2X, it is required to study the sidelink discontinuous reception (DRX). In a sidelink (especially for Mode 2), since a retransmission resource is no longer allocated by a network device, but selected by a transmitting device (Tx UE) in a resource pool, there is currently no solution for the sidelink DRX mechanism.

In order to solve at least one of the above problems, embodiments of this disclosure provide a sidelink discontinuous reception method and apparatus.

According to an aspect of the embodiments of this disclosure, there is provided a sidelink discontinuous reception method, including:

> a first terminal equipment receives first sidelink control information transmitted by a second terminal equipment, the first sidelink control information indicating a reserved resource used for retransmission after a slot where the first sidelink control information is located; and
> the first terminal equipment is in an active state or an on state in a sidelink at a slot where the reserved resource is located.

According to another aspect of the embodiments of this disclosure, there is provided a sidelink discontinuous reception apparatus, configured in a first terminal equipment, the apparatus including:

> a receiving unit configured to receive first sidelink control information transmitted by a second terminal equipment, the first sidelink control information indicating a reserved resource used for retransmission after a slot where the first sidelink control information is located; and
> a processing unit configured to, at a slot where the reserved resource is located, enable the first terminal equipment to be in an active state or an on state in a sidelink.

According to a further aspect of the embodiments of this disclosure, there is provided a sidelink discontinuous reception method, including:

> a first terminal equipment receives first sidelink control information transmitted by a second terminal equipment, the first sidelink control information not indicating a reserved resource used for retransmission after a slot where the first sidelink control information is located; and
> the first terminal equipment, after the predetermined number of slots in a resource pool from receiving the first sidelink control information, is in an active state or an on state in a sidelink.

According to a still further aspect of the embodiments of this disclosure, there is provided a sidelink discontinuous reception apparatus, configured in a first terminal equipment, the apparatus including:

> a receiving unit configured to receive first sidelink control information transmitted by a second terminal equipment, the first sidelink control information not indicating a reserved resource used for retransmission after a slot where the first sidelink control information is located; and
> a processing unit configured to, after the predetermined number of slots in a resource pool from receiving the first sidelink control information, enable the first terminal equipment to be in an active state or an on state in a sidelink.

According to a yet still further aspect of the embodiments of this disclosure, there is provided a sidelink discontinuous reception method, including:

a first terminal equipment receives third sidelink control information transmitted by a second terminal equipment, the third sidelink control information indicating a first reserved resource used for retransmission after a slot where the third sidelink control information is located; and
the first terminal equipment, in a case where a corresponding physical sidelink control channel (PSCCH) is not received on the first reserved resource, starting from a first symbol of a first slot in a sidelink resource pool after a slot where the first reserved resource is located, is in an active state or an on state at a plurality of continuous slots in the sidelink resource pool.

According to a yet still further aspect of the embodiments of this disclosure, there is provided a sidelink discontinuous reception apparatus, configured in a first terminal equipment, the apparatus including:

a receiving unit configured to receive third sidelink control information transmitted by a second terminal equipment, the third sidelink control information indicating a first reserved resource used for retransmission after a slot where the third sidelink control information is located; and
a processing unit configured to, in a case where a corresponding physical sidelink control channel is not received on the first reserved resource, starting from a first symbol of a first slot in a sidelink resource pool after a slot where the first reserved resource is located, enable the first terminal equipment to be in an active state or an on state at a plurality of continuous slots in the sidelink resource pool.

An advantage of the embodiments of this disclosure exists in that, by receiving, by a receiving device, sidelink control information transmitted by a transmitting device, and performing discontinuous reception for retransmission according to a reserved resource indicated in the sidelink control information, the sidelink DRX mechanism may be realized, so that the receiving device may receive retransmission data of the transmitting device, and power consumption may be saved.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.

FIG. 1 is a schematic diagram of a communications system of an embodiment of this disclosure;
FIG. 2 is a schematic diagram of a sidelink discontinuous reception method of an embodiment of this disclosure;
FIG. 3 is a schematic diagram showing an example of sidelink discontinuous reception of an embodiment of this disclosure;
FIG. 4 is a schematic diagram showing another example of sidelink discontinuous reception of an embodiment of this disclosure;
FIG. 5 is a schematic diagram of a sidelink discontinuous reception method of an embodiment of this disclosure;
FIG. 6 is a schematic diagram showing an example of sidelink discontinuous reception of an embodiment of this disclosure;
FIG. 7 is a schematic diagram showing another example of sidelink discontinuous reception of an embodiment of this disclosure;
FIG. 8 is a schematic diagram of a sidelink discontinuous reception method of an embodiment of this disclosure;
FIG. 9 is a schematic diagram showing an example of sidelink discontinuous reception of an embodiment of this disclosure;
FIG. 10 is a schematic diagram of a sidelink discontinuous reception apparatus of an embodiment of this disclosure;
FIG. 11 is a schematic diagram of a network device of an embodiment of this disclosure; and
FIG. 12 is a schematic diagram of a terminal equipment of an embodiment of this disclosure;

Detailed Description of the Disclosure

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of' or "a type of' in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communications network" or "wireless communications network" may refer to a network satisfying any one of the following communication standards: long term evolution (LTE), long term evolution-advanced (LTE-A), wideband code division multiple access (WCDMA), and high-speed packet access (HSPA), etc.

And communications between devices in a communications system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, and/or other communication protocols that are currently known or will be developed in the future.

In the embodiments of this disclosure, the term "network device", for example, refers to an equipment in a communication system that accesses a terminal equipment to the communications network and provides services for the terminal equipment. The network device may include but not limited to the following equipment: a base station (BS), an access point (AP), a transmission reception point (TRP), a broadcast transmitter, a mobile management entity (MME), a gateway, a server, a radio network controller (RNC), a base station controller (BSC).

The base station may include but not limited to a node B (NodeB or NB), an evolved node B (eNodeB or eNB), and a 5G base station (gNB). Furthermore, it may include a remote radio head (RRH), a remote radio unit (RRU), a relay, or a low-power node (such as a femto, and a pico). The term "base station" may include some or all of its functions, and each base station may provide communications coverage for a specific geographical area. And a term "cell" may refer to a base station and/or its coverage area, which depends on a context of the term.

In the embodiments of this disclosure, the term "user equipment (UE)" or "terminal equipment (TE) or terminal device" refers to, for example, equipment accessing to a communication network and receiving network services via a network device. The terminal equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communications device, a hand-held device, a machine-type communications device, a lap-top, a cordless telephone, a smart cell phone, a smart watch, and a digital camera.

For another example, in a scenario such as the Internet of Things (IoT), etc., the user equipment may also be a machine or a device performing monitoring or measurement. For example, it may include but not limited to a machine-type communications (MTC) terminal, a vehicle mounted communication terminal, a device to device (D2D) terminal, and a machine to machine (M2M) terminal.

Moreover, the term "network side" or "network device side" refers to a side of a network, which may be a base station, and may include one or more network devices described above. The term "user side" or "terminal side" or "terminal equipment side" refers to a side of a user or a terminal, which may be a UE, and may include one or more terminal equipments described above. Unless otherwise specified in this disclosure, "device" may refer to a network device or a terminal equipment.

Scenarios in the embodiments of this disclosure shall be described below by way of examples, but this disclosure is not limited thereto.

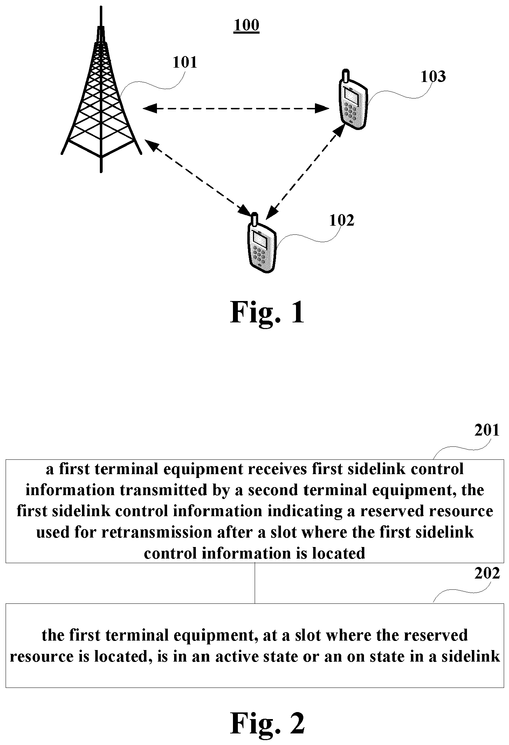

FIG. 1 is a schematic diagram of a communications system of an embodiment of this disclosure, in which a case where terminal equipments and a network device are taken as examples is schematically shown. As shown in FIG. 1, a communications system 100 may include a network device 101 and terminal equipments 102, 103. For the sake of simplicity, an example having only two terminal equipments and one network device is schematically given in FIG. 1; however, the embodiment of this disclosure is not limited thereto.

In the embodiments of this disclosure, existing services or services that may be implemented in the future may be performed between the network device 101 and the terminal equipments 102, 103 or between the terminal equipments 102, 103. For example, such services may include but not limited to an enhanced mobile broadband (eMBB), massive machine type communication (MTC), and ultra-reliable and low-latency communication (URLLC).

It should be noted that FIG. 1 shows that the two terminal equipments 102 and 103 are both within the coverage of the network device 101, but this disclosure is not limited thereto. Two terminal equipments 102 and 103 may not be within the coverage of network device 101, or the terminal device 102 may be within the coverage of network device 101 and the terminal device 103 may be outside the coverage of network device 101.

In the embodiments of this disclosure, sidelink transmission can be performed between the terminal equipments 102 and 103. For example, the terminal devices 102 and 103 which are both within the coverage of the network device 101 may perform sidelink transmission to achieve V2X communications, or the terminal devices 102 and 103 which are both outside the coverage of the network device 101 may perform sidelink transmission to achieve V2X communications, or the terminal device 102 which is within the coverage of the network device 101 and the terminal device 103 which is outside the coverage of the network device 101 may perform sidelink transmission to achieve V2X communications.

In the embodiments of this disclosure, the terminal equipment 102 and/or 103 may autonomously select the sidelink resources (i.e., adopting Mode 2); in this case, the sidelink transmission is independent of the network equipment 101, that is, the network equipment 101 is optional. Furthermore, in the embodiments of this disclosure, the mode of autonomously selecting the sidelink resources (i.e., adopting Mode 2) and the mode of allocating, by a network device, the sidelink resources (i.e., adopting Mode 1) may be combined; this disclosure is not limited thereto.

In V2X, the terminal equipment may obtain the sidelink transmission resources by the process of sensing (detection) + resource selection, in which it may continuously perform sensing to obtain the resource occupancy in a resource pool. For example, the terminal equipment may estimate the resource occupancy in the next period of time (called "selection window") based on the resource occupancy in the previous period of time (called "sensing window"). For the process of sensing detection + resource selection in NR V2X, contents in 14.1.1.6 etc. of 3GPP TS 36.213 V15.2.0 may be referred to.

In the embodiments of this disclosure, V2X is taken as an example to explain the sidelink, but this disclosure is not limited thereto, and may also be applied to the sidelink transmission scenarios other than V2X. In the following description, without causing confusion, the terms "sidelink" and "V2X" may be replaced mutually, the terms "PSFCH" and "sidelink feedback channel" may be replaced mutually, the terms "PSCCH" and "sidelink control channel" or "sidelink control information" may be replaced mutually, and the terms "PSSCH" and "sidelink data channel" or "sidelink data" may also be replaced mutually.

In addition, transmitting or receiving PSCCH may be understood as transmitting or receiving sidelink control information carried by PSCCH; transmitting or receiving PSSCH may be understood as transmitting or receiving sidelink data carried by PSSCH; transmitting or receiving PSFCH may be understood as transmitting or receiving sidelink feedback information carried by PSFCH. Sidelink transmission may be understood as PSCCH/PSSCH transmission or sidelink data/information transmission.

Embodiments of the first aspect

The embodiments of this disclosure provide a sidelink discontinuous reception method, which shall be described from a first terminal equipment. A second terminal equipment may transmit sidelink data to a first terminal equipment, and thus the second terminal equipment needs to make resource selection to determine a transmission resource of sidelink data. From the perspective of sidelink data transmission, the second terminal equipment of the embodiment of the present disclosure is a transmitting device, and the first terminal equipment is a receiving device.

FIG. 2 is a schematic diagram of a sidelink discontinuous reception method of an embodiment of this disclosure; as shown in FIG. 2, the method includes:

> 201: a first terminal equipment receives first sidelink control information transmitted by a second terminal equipment, the first sidelink control information indicating a reserved resource used for retransmission after a slot where the first sidelink control information is located; and
> 202: the first terminal equipment, at a slot where the reserved resource is located, is in an active state or an on state in a sidelink.

It should be noted that FIG. 2 only schematically illustrates the embodiment of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIG. 2.

In the embodiments of this disclosure, the terminal equipment may perform sidelink DRX. Specifically, for example, the terminal equipment may be in the active state or the on state in the sidelink, in which the terminal device performs PSCCH detection in a corresponding receiving resource pool; the terminal equipment may also be in an inactive state or an off state in the sidelink, in which the terminal equipment does not perform PSCCH detection in a corresponding receiving resource pool. The embodiments of this disclosure are not limited thereto, and the DRX mechanism may also refer to relevant technologies.

In some embodiments, the first terminal equipment is an intended receiving terminal of the first sidelink control information and/or a corresponding PSSCH. For example, a destination identification indicated in the first sidelink control information is identical to an identification of the first terminal equipment (the corresponding traffic is unicast), or a destination identification indicated in the first sidelink control information includes an identification of the first terminal equipment (the corresponding traffic is multicast), or the first sidelink control information indicates traffics interested by the first terminal equipment (the corresponding traffic is broadcast).

For example, UE 1 may perform blind detection on PSCCH; when a result of the blind detection is that a destination ID in a certain SCI is the same as its UE ID, or that the destination ID therein includes its UE ID, or that the SCI indicates the traffics that UE 1 is interested in, UE 1 regards the SCI as the one transmitted to itself and may perform processing according to the SCI.

In the embodiments of this disclosure, the first sidelink control information and the second to fourth sidelink control information described later are SCI carried by PSCCH or PSSCH, but this disclosure is not limited thereto. In addition, the current slot is, for example, a slot where the PSCCH and/or PSSCH to which the first sidelink control information corresponds is(are) located.

The following description shall be described below for a certain sidelink process; when a timer is used, the timer is started/stopped for each process, that is, the terminal equipment may respectively configure a timer for different processes, and each type of timer may have a plurality of timers. In the case of a plurality of sidelink processes, the terminal equipment may process these side link processes in a combined manner. For example, if UE 1 has a plurality of sidelink processes and needs to be activated or turned on for a certain sidelink process, then UE 1 should be in an active state or an on state.

In the embodiments of this disclosure, on a reserved resource indicated in the SCI, the first terminal equipment may be activated or turned on at a time position of the reserved resource and receive the sidelink information (such as PSCCH/PSSCH) at the time position, thus realizing the V2X DRX mechanism.

In some embodiments, from a first symbol of a first slot in sidelink resource pool after a slot in which the first sidelink control information is received to a last symbol of a slot in sidelink resource pool prior to a slot where a reserved resource, used for next time of transmission, indicated in the first sidelink control information is located, the first terminal equipment may enter into an inactive state or an off state.

For example, after UE 1 receives a SCI transmitted by UE 2 in slot 1, if the SCI indicates the corresponding PSSCH (in slot 1 in the resource pool) and a reserved resource 1 (in slot 2 in the resource pool), UE 1 may determine that UE 2 does not transmit sidelink information or sidelink data during the time between slot 1 and slot 2, and UE 1 may enter into the inactive state or the off state, thereby saving power consumption and realizing V2X DRX mechanism.

In some embodiments, the first terminal equipment is activated or started in the sidelink starting from a first symbol of the slot where the reserved resource is located, and the active state or the on state lasts for (or maintains) a slot or a plurality of continuous slots in a sidelink resource pool.

For example, the first terminal equipment is activated or turned on in the sidelink starting from a first symbol of a slot where the reserved resource is located, in a case where the first sidelink control information indicates that a hybrid automatic retransmission request (HARQ) is disabled, or the first sidelink control information indicates that a hybrid automatic retransmission request is enabled and the first terminal equipment feeds back non-acknowledgement (NACK).

For another example, the first terminal equipment may be in (or maintain) the inactive state or the off state in the sidelink starting from a first symbol of a slot where the reserved resource is located, in a case where the first sidelink control information indicates that a hybrid automatic retransmission request (HARQ) is enable and the first terminal equipment feeds back acknowledgement (ACK).

The following will take the timer as an example to further explain this disclosure, but this disclosure is not limited thereto, and other non-timer mechanisms may also be used. In addition, for a slot related to the DRX or timer in the embodiments of this disclosure, only the slot in the sidelink resource pool is considered, and the "start", "stop", and "timeout" and so on of the timer are all for the slot in the sidelink resource pool. For a slot which is not included in the sidelink resource pool (i.e., a slot that cannot be used by the sidelink), the running timer may be in the "suspending" or "pending" state.

The running time length of the timer may be calculated by the number of slots included in the sidelink resource pool, and may also be converted into a corresponding millisecond value. For a slot which is not included in the sidelink resource pool, the slot is not included in the calculation of the time length of the timer, that is, the timer should be suspended (or pending) at this time, and the slot outside the resource pool is not counted.

For the conversion of slot and millisecond, the following will take a slot in which the transmitting device performs sensing and resource selection as an example to explain. For example, M' is the number of corresponding slots after M is converted to logical slot, and M is the number of slots corresponding to the actual time length of the timer, as described in the following formula (1):

$$M' = \left\lceil \frac{N}{20 \; ms} \times M \right\rceil \qquad (1)$$

where, N is the number of slots that may be used for sidelink transmission within 20ms. The above is only a schematic description of the conversion between slot and millisecond. Please refer to relevant technologies for details.

In some embodiments, the first terminal equipment starts a first timer for the sidelink process. For example, the first timer may be defined as *drx-HARQ-RTT-TimerSL* and during the operation of *drx-HARQ-RTT-TimerSL*, the first terminal equipment may be in the inactive state or the off state; However, whether the first terminal equipment enters into the inactive or off state needs to consider other factors, such as the situation of other sidelink processes. This disclosure is not limited thereto; for example, the first timer may also be other names or definitions.

For example, a value of the first timer is the number of slots, the number of slots being a total number of slots in a resource pool contained in a period from the first slot in sidelink resource pool after the slot where the first terminal equipment receives the first sidelink control information to a slot in sidelink resource pool prior to a slot where a reserved resource, used for next time of transmission, indicated in the first sidelink control information is located. The value of the first timer is reduced by 1 for every slot in sidelink resource pool being passed; when the value of the first timer reaches 0, the first timer times out.

In some embodiments, the first terminal equipment, for the sidelink process, starts a second timer and enters into the active state or the on state at a next slot in sidelink resource pool after the first timer expires, in a case where the first sidelink control information indicates that a hybrid automatic retransmission request is disabled, or the first sidelink control information indicates that a hybrid automatic retransmission request is enabled and the first terminal equipment feeds back non-acknowledgement (NACK).

For example, the second timer is *drx-RetransmissionTimerSL*, and the first terminal equipment is in the active state or the on state during the operation of *drx-RetransmissionTimerSL*. This disclosure is not limited thereto; for example, the second timer may also be other names.

For example, the second timer is turned on at the first symbol of the first slot in sidelink resource pool after the first timer expires; and the running time of the second timer is one slot.

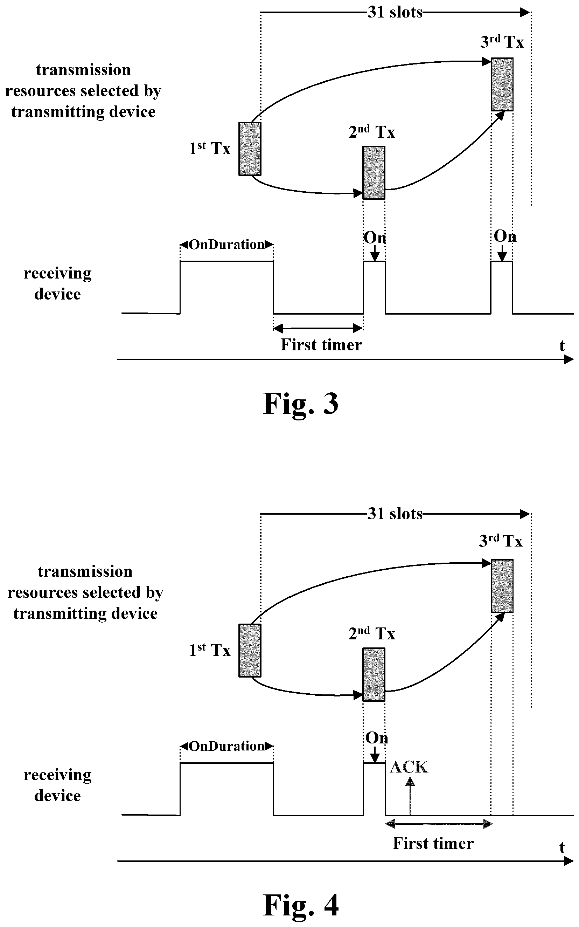

FIG. 3 is a schematic diagram showing an example of sidelink discontinuous reception of an embodiment of this disclosure, showing a situation that the SCI indicates the reserved resources for retransmission after the slot where the SCI is located (for example, this means that the adjacent resources are within 32 slots) and that HARQ-ACK is disabled (HARQ disabled).

As shown in FIG. 3, the transmitting device (Tx UE) transmits SCI 1 (the first SCI) to the receiving device (Rx UE) on transmission resource 1 (as shown in the 1st Tx in FIG. 3), the SCI 1 indicating the resources of the PSSCH corresponding thereto (that is, as shown in the 1st Tx in FIG. 3), and also indicating the reserved resource 1 (as shown in the 2nd Tx in FIG. 3) and the reserved resource 2 (as shown in the 3rd Tx in FIG. 3) for retransmission after the slot where the SCI 1 is located.

As shown in FIG. 3, after receiving the SCI 1, the receiving device may start the *drx-HARQ-RTT-TimerSL* timer at a first symbol of a first slot after the slot where the SCI 1 is located. As shown in FIG. 3, the *drx-HARQ-RTT-TimerSL* timer times out after the end of a previous slot of the slot where the reserved resource (i.e., the reserved resource 1), indicated by SCI 1, for the next transmission is located.

As shown in FIG. 3, the *drx-Retransmission-TimerSL* timer is started at a first symbol after the *drx-HARQ-RTT-TimerSL* timer times out or stops, and the receiving device enters into the active state or the on state to receive the retransmission transmitted on the reserved resource 1. The *drx-RetransmissionTimerSL* timer may be one slot.

As shown in FIG. 3, *drx-HARQ-RTT-TimerSL* timer is started after SCI 2 to which the reserved resource 1 corresponds is received and correctly decoded. The *drx-HARQ-RTT-TimerSL* timer times out after the end of a previous slot of the slot where the reserved resource (i.e., the reserved resource 2), indicated by SCI 1 or SCI 2, for the next transmission is located.

As shown in FIG. 3, the *drx-Retransmission-TimerSL* timer is started at a first symbol after the *drx-HARQ-RTT-TimerSL* timer times out or stops, and the receiving device enters into the active state or the on state to receive the retransmission transmitted on the reserved resource 2. A value of the *drx-Retransmission-TimerSL* timer may be 1, namely, the timer may run one slot.

The above exemplarily illustrate the first timer and the second timer, as well as the inactive or off state, active or on state of the receiving device of the embodiment of the present disclosure, but the present disclosure is not limited thereto.

In some embodiments, the first terminal equipment receives the second sidelink control information in the active state or the on state, and stops the second timer, in a case where the second sidelink control information is received and a destination identification (destination ID) and a source identification (source ID) and a hybrid automatic retransmission request (HARQ) process identification indicated by the second sidelink control information are respectively identical to a destination identification (destination ID) and a source identification (source ID) and a hybrid automatic retransmission request (HARQ) process identification indicated by the first sidelink control information.

For example, as shown in FIG. 3, the *drx-RetransmissionTimerSL* timer is started at a first symbol after the *drx-HARQ-RTT-TimerSL* timer times out or stops, and the receiving device enters into the active state or the on state to receive the retransmission transmitted on the reserved resource 1 (as shown in the 2nd Tx in FIG. 3).

If the receiving device receives a SCI (the second SCI) in the reserved resource 1 (as shown in the 2nd Tx in FIG. 3), and the destination ID, the source ID and the HARQ process ID indicated by the second SCI are the same as the destination ID, the source ID and the HARQ process ID indicated by the first SCI, it may be regarded that the second SCI indicates the retransmission of the HARQ process and the receiving device may receive the retransmission and stop the *drx-RetransmissionTimerSL.*

In some embodiments, the first terminal equipment may maintain the inactive state or the off state from a first symbol of a first slot in sidelink resource pool after the first timer expires, in a case where the first sidelink control information indicates that a hybrid automatic retransmission request (HARQ) is enabled, and the first terminal equipment feeds back acknowledgement (ACK). For example, the second timer is not started at a first symbol in sidelink resource pool after the first timer expires.

FIG. 4 is a schematic diagram showing an example of sidelink discontinuous reception of an embodiment of this disclosure, showing a situation that the SCI indicates the reserved resources for retransmission after the slot where the SCI is located (for example, this means that the adjacent resources are within 32 slots) and that HARQ-ACK is enabled (HARQ enabled).

As shown in FIG. 4, the transmitting device (Tx UE) transmits SCI 1 (the first SCI) to the receiving device (Rx UE) on transmission resource 1 (as shown in the 1st Tx in FIG. 4), the SCI 1 indicating the resources of the PSSCH corresponding thereto (that is, as shown in the 1st Tx in FIG. 4), and also indicating the reserved resource 1 (as shown in the 2nd Tx in FIG. 4) and the reserved resource 2 (as shown in the 3rd Tx in FIG. 4) for retransmission after the slot where the SCI 1 is located.

As shown in FIG. 4, after receiving the SCI 1, the receiving device may start the *drx-HARQ-RTT-TimerSL* timer at a first symbol of a first slot after the slot where the SCI 1 is located. As shown in FIG. 4, the *drx-HARQ-RTT-TimerSL* timer times out after the end of a previous slot of the slot where the reserved resource (i.e., the reserved resource 1), indicated by SCI 1, for the next transmission is located.

As shown in FIG. 4, the *drx-RetransmissionTimerSL* timer is started at a first symbol after the *drx-HARQ-RTT-TimerSL* timer times out or stops, and the receiving device enters into the active state or the on state to receive the retransmission transmitted on the reserved resource 1. A value of the *drx-RetransmissionTimerSL* timer may be 1.

As shown in FIG. 4, *drx-HARQ-RTT-TimerSL* timer is started after SCI 2 to which the reserved resource 1 corresponds is received and correctly decoded. As shown in FIG. 4, if HARQ-ACK is enabled and the receiving device feeds back ACK, the reserved resource 2 (as shown in 3rd Tx in FIG. 4) is canceled or released by the second terminal equipment, and the receiving device does not start *drx-RetransmissionTimerSL* in the slot where the reserved resource 2 is located.

The above exemplarily illustrate the first timer and the second timer, as well as the inactive or off state, active or on state of the receiving device of the embodiment of the present disclosure, but the present disclosure is not limited thereto.

In some embodiments, a slot where a resource, used for initial transmission, selected by the second terminal equipment is located is in an operational period of a third timer, and the third timer operates periodically and is used by the first terminal equipment for discontinuous reception (DRX).

For example, the third timer may be defined as *OnDurationTimer,* and the first terminal equipment is in the active state or the on state during the operation of *OnDurationTimer.* This disclosure is not limited thereto; for example, the third timer may also be other names or definitions.

For example, as shown in FIGs. 3 and 4, the transmission resource 1 (as shown in the 1st Tx in FIG. 3 or FIG. 4) used by the transmitting device (Tx UE) to transmit the initial transmission is located during the operation of the third timer *OnDurationTimer.* The transmitting device may obtain the DRX configuration of the receiving device, thus ensuring that a slot where the first resource of the selected resources is located at least is within the operational period of the *OnDurationTimer* of the receiving device.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It can be seen from the above embodiments that, by receiving, by a receiving device, sidelink control information transmitted by a transmitting device, and performing discontinuous reception according to a reserved resource indicated in the sidelink control information, the sidelink DRX mechanism may be realized, so that the receiving device may receive retransmission data of the transmitting device, and power consumption may be saved.

Embodiments of the second aspect

The embodiments of this disclosure provide a sidelink discontinuous reception method, which shall be described from a first terminal equipment, with contents identical to those in the embodiments of the first aspect being not going to be described herein any further. The embodiments of the second aspect may be implemented in combination with the embodiments of the first aspect or implemented separately.

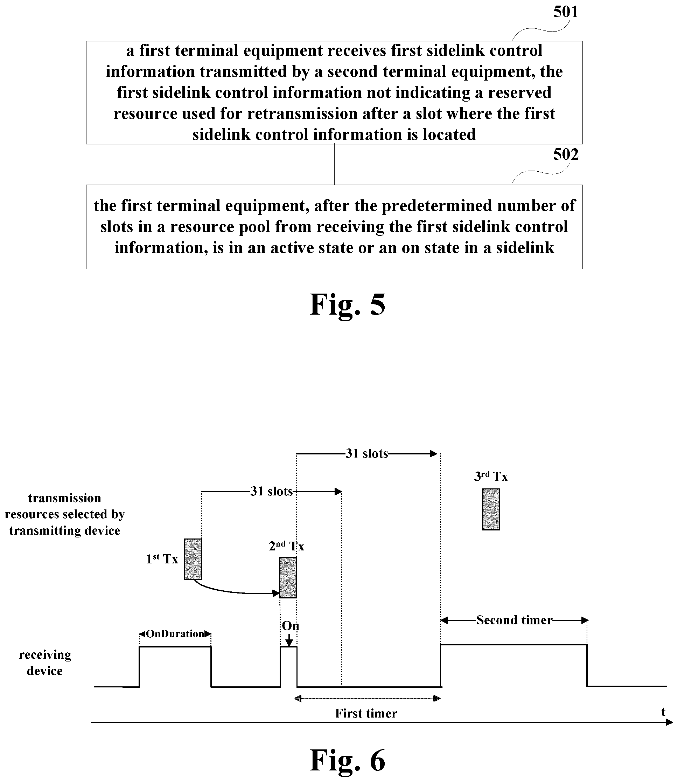

FIG. 5 is a schematic diagram of a sidelink discontinuous reception method of an embodiment of this disclosure; as shown in FIG. 5, the method includes:

501: a first terminal equipment receives first sidelink control information transmitted by a second terminal equipment, the first sidelink control information not indicating a reserved resource used for retransmission after a slot where the first sidelink control information is located; and

502: the first terminal equipment, after the predetermined number of slots in a resource pool from receiving the first sidelink control information, is in an active state or an on state in a sidelink.

It should be noted that FIG. 5 only schematically illustrates the embodiment of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIG. 5.

In some embodiments, the first sidelink control information does not indicate a reserved resource used for retransmission. For example, the current transmission may be the last retransmission, or the two adjacent resources may not be within 32 slots. As to a situation that two adjacent resources are not within 32 slots, the receiving device needs to be able to receive retransmission.

Thus, the first terminal equipment, after the predetermined time from the moment of receiving the first sidelink control information, is in the active state or the on state. For example, at a first symbol position of the 32nd slot after the slot where the first sidelink control information is located, the first terminal equipment starts *drx-RetransmissionTimerSL*.

In some embodiments, from a first symbol of a first slot in sidelink resource pool after a slot in which the first sidelink control information is received, to a last symbol of the predetermined number of slots in sidelink resource pool after a slot where the first sidelink control information is located, the first terminal equipment may be in an inactive state or an off state in the sidelink.

In some embodiments, the first terminal equipment is an intended receiving terminal of the first sidelink control information and/or a corresponding physical sidelink shared channel (PSSCH).

For example, a destination identification indicated in the first sidelink control information is identical to an identification of the first terminal equipment, or a destination identification indicated in the first sidelink control information includes an identification of the first terminal equipment, or the first sidelink control information indicates traffics interested by the first terminal equipment.

In some embodiments, the first terminal equipment, for a sidelink process, starts a first timer from a first symbol of a first slot in sidelink resource pool after a slot where the first terminal equipment receives the first sidelink control information.

For example, the first timer may be defined as *drx-HARQ-RTT-TimerSL* and during the operation of *drx-HARQ-RTT-TimerSL*, the first terminal equipment may be in the inactive state or the off state. This disclosure is not limited thereto; for example, the first timer may also be other names or definitions.

In some embodiments, a value of the first timer is the number of slots, the number thereof being a predetermined number of slots in a sidelink resource pool; the value of the first timer is reduced by 1 for every slot in sidelink resource pool being passed; when the value of the first timer reaches 0, the first timer times out. For example, the predetermined number of slots is 31.

In some embodiments, the first terminal equipment, for the sidelink process, starts a second timer and enters into the active state or the on state at a next slot in sidelink resource pool after the first timer expires.

For example, the second timer may be defined as *drx-RetransmissionTimerSL*, and the first terminal equipment is in the active state or the on state during the operation of *drx-RetransmissionTimerSL*. This disclosure is not limited thereto; for example, the second timer may also be other names or definitions.

In some embodiments, the second timer is started at the first symbol of the first slot in resource pool after the first timer expires, and a value of the second timer is the number of a plurality of continuous slots in sidelink resource pool. The value of the second timer is reduced by 1 for every slot in sidelink resource pool being passed; when the value of the second timer reaches 0, the second timer times out.

FIG. 6 is a schematic diagram showing another example of sidelink discontinuous reception of an embodiment of this disclosure, showing a situation that the SCI 0 indicates the reserved resources for retransmission after the slot where the SCI 0 is located (for example, this means that the adjacent resources are within 32 slots), that the SCI 1 does not indicate the reserved resources for retransmission after the slot where the SCI 1 is located (for example, this means that the adjacent resources are not within 32 slots) and that HARQ-ACK is disabled (HARQ disabled).

As shown in FIG. 6, the transmitting device (Tx UE) transmits SCI 0 to the receiving device (Rx UE) on transmission resource 1 (as shown in the 1st Tx in FIG. 6), the SCI 0 indicating the resources of the corresponding PSSCH (that is, as shown in the 1st Tx in FIG. 6), and also indicating the reserved resource 1 (as shown in the 2nd Tx in FIG. 6) for retransmission after the slot where the SCI 0 is located.

As shown in FIG. 6, after receiving the SCI 0, the receiving device may start the *drx-HARQ-RTT-TimerSL* timer at a first symbol of a first slot after the slot where the SCI 0 is located. As shown in FIG. 6, the *drx-HARQ-RTT-TimerSL* timer times out after the end of a previous slot of the slot where the reserved resource (i.e., the reserved resource 1), indicated by SCI 0, for the next transmission is located.

As shown in FIG. 6, the *drx-Retransmission-TimerSL* timer is started at a first symbol after the *drx-HARQ-RTT-TimerSL* timer times out or stops, and the receiving device enters into the active state or the on state to receive the retransmission transmitted on the reserved resource 1. A value of the *drx-Retransmission-TimerSL* timer may be 1.

As shown in FIG. 6, the transmitting device (Tx UE) transmits SCI 1 (the first SCI) to the receiving device (Rx UE) on reserved resource 1 (as shown in the 2nd Tx in FIG. 6), the SCI 1 not indicating reserved resources after the slot where the SCI 1 is located. As shown in FIG. 6, there are no reserved resources within the 32 slots after the reserved resource 1; the time interval between reserved resource 2 (as shown in 3rd Tx in FIG. 6) for retransmission and reserved resource 1 is greater than 32 slots.

As shown in FIG. 6, corresponding to the reserved resource 1 (as shown in 2nd Tx in FIG. 6), *drx-HARQ-RTT-TimerSL* timer is started after SCI 1 to which the reserved resource 1 corresponds is received and correctly decoded. The *drx-HARQ-RTT-TimerSL* timer is from a first symbol of a first slot in sidelink resource pool after a slot in which the first terminal equipment receives the first SCI (as shown in 2nd Tx in FIG. 6) to a last symbol of the 31st slot in sidelink resource pool after a slot where the first SCI is located.

As shown in FIG. 6, the *drx-Retransmission-TimerSL* timer is started at a first symbol after the *drx-HARQ-RTT-TimerSL* timer times out or stops, and the receiving device enters into the active state or the on state to receive the retransmission transmitted on the reserved resource 2. As shown in FIG. 6, the *drx-RetransmissionTimerSL* timer may run on a plurality of continuous slots in the sidelink resource pool.

The above exemplarily illustrate the first timer and the second timer, as well as the inactive or off state, active or on state of the receiving device of the embodiment of the present disclosure, but the present disclosure is not limited thereto.

In some embodiments, the first terminal equipment may also determine whether to start the second timer according as sidelink control information (2nd stage SCI) in a physical sidelink shared channel (PSSCH) to which the first sidelink control information corresponds indicates whether there exists retransmission or retransmission times.

For example, in FIG. 6, corresponding to reserved resource 1 (as shown in 2nd Tx in FIG. 6), the first SCI is received, and the PSSCH to which the first SCI corresponds carries the 2nd stage SCI. If the 2nd stage SCI indicates that the HARQ process has subsequent retransmission, the *drx-RetransmissionTimerSL* timer may be started after 31 slots, as shown in FIG. 6; if the 2nd stage SCI indicates that the HARQ process has no subsequent retransmission or the subsequent retransmissions number of times is 0, the receiving device may no longer start the *drx-RetransmissionTimerSL* timer.

In some embodiments, the first terminal equipment determines whether to start the second timer according to a priority and/or a channel busy ratio (CBR) indicated by the first sidelink control information.

For example, in FIG. 6, corresponding to reserved resource 1 (as shown in 2nd Tx in FIG. 6), the first SCI is received. If the first SCI indicates high priority (for example, higher than a certain threshold), the *drx-RetransmissionTimerSL* timer may be started after 31 slots, as shown in FIG. 6; if the first SCI indicates low priority (for example, lower than a certain threshold), the receiving device may no longer start the *drx-RetransmissionTimerSL* timer.

In some embodiments, a value of the second timer is determined according to the priority indicated by the first sidelink control information. For example, for different priorities, candidate values to which the second timer corresponds are different.

For example, the corresponding *drx-RetransmissionTimerSL* value may be configured in IE configured by the resource pool. Corresponding to different priorities or different priority ranges, different *drx-RetransmissionTimerSL* values may be configured. Alternatively, the higher the priority, the greater the value of *drx-RetransmissionTimerSL*.

In some embodiments, the first terminal equipment receives the second sidelink control information in the active state or the on state, and stops the second timer, in a case where the second sidelink control information is received and a destination identification and a source identification and a hybrid automatic retransmission request (HARQ) process identification indicated by the second sidelink control information are respectively identical to a destination identification and a source identification and a hybrid automatic retransmission request (HARQ) process identification indicated by the first sidelink control information.

In some embodiments, the first terminal equipment may maintain the inactive state or the off state in the sidelink from a first symbol of a first slot in sidelink resource pool after the first timer expires, in a case where the first sidelink control information indicates that a hybrid automatic retransmission request (HARQ) is enabled, and the first terminal equipment feeds back acknowledgement (ACK). For example, the second timer is not started at a first symbol of a first slot in sidelink resource pool after the first timer expires.

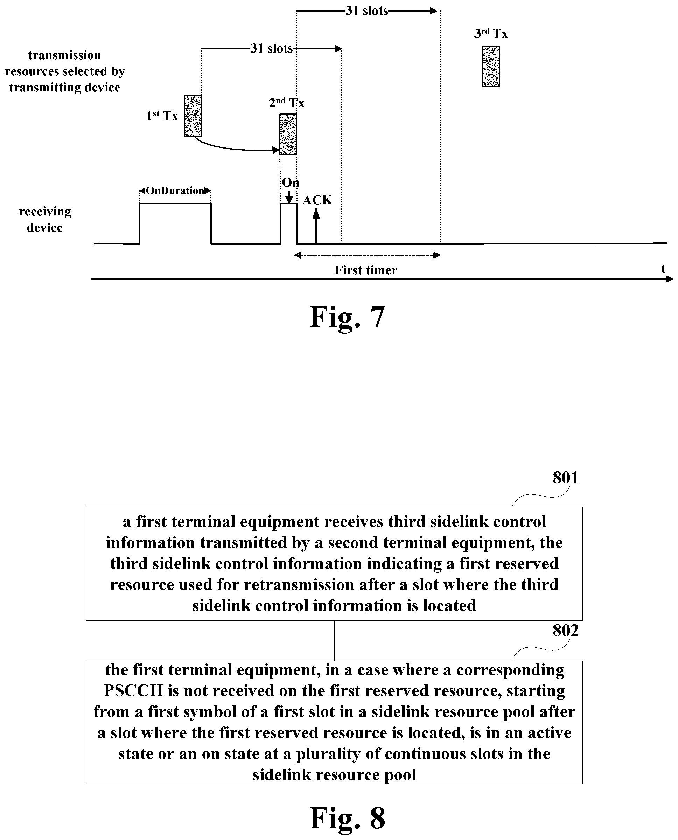

FIG. 7 is a schematic diagram showing another example of sidelink discontinuous reception of an embodiment of this disclosure, showing a situation that the SCI 0 indicates the reserved resources for retransmission after the slot where the SCI 0 is located (for example, this means that the adjacent resources are within 32 slots), that the SCI 1 does not indicate the reserved resources for retransmission after the slot where the SCI 1 is located (for example, this means that the adjacent resources are not within 32 slots) and that HARQ-ACK is enabled (HARQ enabled).

As shown in FIG. 7, the transmitting device (Tx UE) transmits SCI 0 to the receiving device (Rx UE) on transmission resource 1 (as shown in the 1st Tx in FIG. 7), the SCI 0 indicating the resources of the corresponding PSSCH (that is, as shown in the 1st Tx in FIG. 7), and also indicating the reserved resource 1 (as shown in the 2nd Tx in FIG. 7) for retransmission after the slot where the SCI 0 is located.

As shown in FIG. 7, after receiving the SCI 0, the receiving device may start the *drx-HARQ-RTT-TimerSL* timer at a first symbol of a first slot after the slot where the SCI 0 is located. As shown in FIG. 7, the *drx-HARQ-RTT-TimerSL* timer times out after the end of a previous slot of the slot where the reserved resource (i.e., the reserved resource 1), indicated by SCI 0, for the next transmission is located.

As shown in FIG. 7, the *drx-Retransmission-TimerSL* timer is started at a first symbol after the *drx-HARQ-RTT-TimerSL* timer times out or stops, and the receiving device enters into the active state or the on state to receive the retransmission transmitted on the reserved resource 1. A value of the *drx-Retransmission-TimerSL* timer may be 1.

As shown in FIG. 7, the transmitting device (Tx UE) transmits SCI 1 (the first SCI) to the receiving device (Rx UE) on reserved resource 1 (as shown in the 2nd Tx in FIG. 7), the SCI 1 not indicating reserved resources after the slot where the SCI 1 is located. As shown in FIG. 7, there are no reserved resources within the 32 slots after the reserved resource 1; the time interval between reserved resource 2 (as shown in 3rd Tx in FIG. 7) for retransmission and reserved resource 1 is greater than 32 slots.

As shown in FIG. 7, corresponding to the reserved resource 1 (as shown in 2nd Tx in FIG. 7), drx-HARQ-RTT-TimerSL timer is started after SCI 1 to which the reserved resource 1 corresponds is received and correctly decoded. The *drx-HARQ-RTT-TimerSL* timer is from a first symbol of a first slot in sidelink resource pool after a slot in which the first terminal equipment receives the first SCI (as shown in 2nd Tx in FIG. 7), to a last symbol of the 31st slot in sidelink resource pool after a slot where the first SCI is located.

As shown in FIG. 7, if HARQ-ACK is enabled and the receiving device feeds back ACK, the reserved resource 2 (as shown in 3rd Tx in FIG. 7) may be canceled, and thus the receiving device may not start *drx-RetransmissionTimerSL.*

The above exemplarily illustrate the first timer and the second timer, as well as the inactive or off state, active or on state of the receiving device of the embodiment of the present disclosure, but the present disclosure is not limited thereto.

In some embodiments, a slot where a resource, used for initial transmission, selected by the second terminal equipment is located is in an operational period of a third timer, and the third timer operates periodically and is used by the first terminal equipment for discontinuous reception (DRX).

For example, the third timer may be defined as *OnDurationTimer,* and the first terminal equipment is in the active state or the on state during the operation of *OnDurationTimer.* This disclosure is not limited thereto; for example, the third timer may also be other names or definitions.

For example, as shown in FIGs. 6 and 7, the transmission resource 1 (as shown in the 1st Tx in FIG. 6 or FIG. 7) used by the transmitting device (Tx UE) to transmit the initial transmission is located during the operation of the third timer *OnDurationTimer.* The transmitting device may obtain the DRX configuration of the receiving device, thus ensuring that a slot where the first resource of the selected resources is located at least is within the operational period of the *OnDurationTimer* of the receiving device.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It can be seen from the above embodiment that, by receiving, by a receiving device, sidelink control information transmitted by a transmitting device, and performing discontinuous reception according as whether a reserved resource is indicated in the sidelink control information, the sidelink DRX mechanism may be realized, so that the receiving device may receive retransmission data of the transmitting device, and power consumption may be saved.

Embodiments of the third aspect

The embodiments of this disclosure provide a sidelink discontinuous reception method, which shall be described from a first terminal equipment, with contents identical to those in the embodiments of the first aspect or the second aspect being not going to be described herein any further. The embodiments of the third aspect may be implemented in combination with the embodiments of the first aspect and the second aspect or implemented separately.

FIG. 8 is a schematic diagram of a sidelink discontinuous reception method of an embodiment of this disclosure; as shown in FIG. 8, the method includes:

> 801: a first terminal equipment receives third sidelink control information transmitted by a second terminal equipment, the third sidelink control information indicating a first reserved resource used for retransmission after a slot where the third sidelink control information is located; and
> 802: the first terminal equipment, in a case where a corresponding physical sidelink control channel (PSCCH) is not received on the first reserved resource, starting from a first symbol of a first slot in a sidelink resource pool after a slot where the first reserved resource is located, is in an active state or an on state at a plurality of continuous slots in the sidelink resource pool.

It should be noted that FIG. 8 only schematically illustrates the embodiment of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIG. 8.

In some embodiments, the first terminal equipment does not receive the corresponding PSCCH/PSSCH on the first reserved resource. For example, the second terminal equipment does not perform transmission on this resource and triggers resource reselection due to factors such as re-evaluation/pre-emption/congestion control/priority; and in this case, in the reselected resources, it may not be guaranteed that the two adjacent resources are within 32 slots; then in this case, the first terminal equipment also needs to receive the corresponding retransmission.

In some embodiments, the first terminal equipment is an intended receiving terminal of the third sidelink control information and/or a corresponding physical sidelink shared channel (PSSCH).

For example, a destination identification indicated in the third sidelink control information is identical to an identification of the first terminal equipment, or a destination identification indicated in the first sidelink control information includes an identification of the first terminal equipment, or the third sidelink control information indicates traffics interested by the first terminal equipment.

In some embodiments, the first terminal equipment, for the sidelink process, further starts a second timer at a first symbol in a sidelink resource pool after a current slot.

For example, the second timer may be defined as *drx-RetransmissionTimerSL,* and the first terminal equipment is in the active state or the on state during the operation of *drx-RetransmissionTimerSL.* This disclosure is not limited thereto; for example, the second timer may also be other names or definitions.

In some embodiments, in a case where the first terminal equipment learns that there exists a second reserved resource used for the retransmission after the first reserved resource, a value of the second timer is a total number of slots in a resource pool contained in a period from a first slot in sidelink resource pool after a slot where the first terminal equipment receives the first sidelink control information to a slot where the second reserved resource is located in the sidelink resource pool. The value of the second timer is reduced by 1 for every slot in sidelink resource pool being passed; when the value of the second timer reaches 0, the second timer times out.

For example, as shown in FIGs. 3 and 4, the transmitting device (Tx UE) transmits SCI (the first SCI) to the receiving device (Rx UE) on transmission resource 1 (as shown in the 1st Tx in FIG. 3 or 4), the SCI indicating the resources of the corresponding PSSCH (that is, as shown in the 1st Tx in FIG. 3 or 4), and also indicating the reserved resource 1 (as shown in the 2nd Tx in FIG. 3 or 4) and the reserved resource 2 (as shown in the 3rd Tx in FIG. 3 or 4) for retransmission.

If the receiving device does not receive PSCCH/PSSCH on the reserved resource 1 (as shown in 2nd Tx in FIG. 3 or 4), the receiving device may start *drx-RetransmissionTimerSL* from a first symbol of a first slot in sidelink resource pool after the slot where the reserved resource 1 is located, and enter into the active state or the on state. The *drx-Retransmission TimerSL* times out after the end of the last slot before the slot where the reserved resource 2 (as shown in 3rd Tx in FIG. 3 or 4) in sidelink resource pool is located.

In some embodiments, in a case where the first terminal equipment learns that there exists no second reserved resource used for the retransmission after the first reserved resource or the first terminal equipment does not know subsequent resources, a value of the second timer is a predetermined number of slots in a sidelink resource pool. The value of the second timer is reduced by 1 for every slot in sidelink resource pool being passed; when the value of the second timer reaches 0, the second timer times out. For example, the predetermined number of slots is 31.

For example, as shown in FIGs. 6 and 7, the transmitting device (Tx UE) transmits SCI (the first SCI) to the receiving device (Rx UE) on transmission resource 1 (as shown in the 1st Tx in FIG. 6 or 7), the SCI indicating the resources of the corresponding PSSCH (that is, as shown in the 1st Tx in FIG. 6 or 7), and also indicating the reserved resource 1 (as shown in the 2nd Tx in FIG. 6 or 7) for retransmission.

If the receiving device does not receive PSCCH/PSSCH on the reserved resource 1 (as shown in 2nd Tx in FIG. 6 or 7), the receiving device may start *drx-RetransmissionTimerSL* from a first symbol of a first slot in sidelink resource pool after the slot where the reserved resource 1 is located, and enter into the active state or the on state. The *drx-Retransmission TimerSL* times out after the end of the last symbol of the 31st slot in sidelink resource pool.

In some embodiments, a value of the second timer is determined according to the priority indicated by the third sidelink control information. For example, for different priorities, candidate values to which the second timer corresponds are different.

For example, the corresponding *drx-RetransmissionTimerSL* value may be configured in IE configured by the resource pool. Corresponding to different priorities or different priority ranges, different value ranges of *drx-RetransmissionTimerSL* may be configured. Alternatively, the higher the priority, the greater the value of *drx-RetransmissionTimerSL*.

In some embodiments, the first terminal equipment receives the fourth sidelink control information in the active state or the on state, and stops the second timer, in a case where the fourth sidelink control information is received and a destination identification and a source identification and a hybrid automatic retransmission request (HARQ) process identification indicated by the fourth sidelink control information are respectively identical to a destination identification and a source identification and a hybrid automatic retransmission request (HARQ) process identification indicated by the third sidelink control information.

In some embodiments, a reselected resource obtained by the second terminal equipment reselecting for the first reserved resource is located after the first reserved resource.

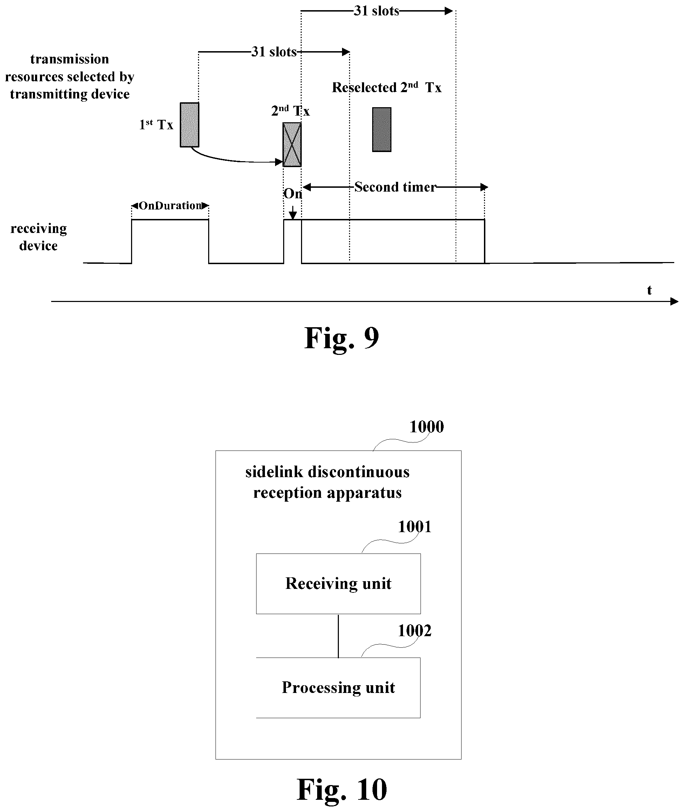

FIG. 9 is a schematic diagram showing another example of sidelink discontinuous reception of an embodiment of this disclosure, showing a situation that the SCI indicates the reserved resources for retransmission after the slot where the SCI is located (for example, this means that the adjacent resources are within 32 slots) and the reselection of the reserved resources due to collision, and that HARQ-ACK is disabled (HARQ disabled).

As shown in FIG. 9, the transmitting device (Tx UE) transmits SCI to the receiving device (Rx UE) on transmission resource 1 (as shown in the 1st Tx in FIG. 9), the SCI indicating the resources of the corresponding PSSCH (that is, as shown in the 1st Tx in FIG. 9), and also indicating the reserved resource 1 (as shown in the 2nd Tx in FIG. 9) for retransmission after the slot where the SCI is located.

As shown in FIG. 9, after receiving the SCI, the receiving device may start the *drx-HARQ-RTT-TimerSL* timer at a first symbol of a first slot after the slot where the SCI 1 is located. As shown in FIG. 9, the *drx-HARQ-RTT-TimerSL* timer times out after the end of a previous slot of the slot where the reserved resource (i.e., the reserved resource 1), indicated by the SCI, for the next transmission is located.

As shown in FIG. 9, the *drx-Retransmission-TimerSL* timer is started at a first symbol after the *drx-HARQ-RTT-TimerSL* timer times out or stops, and the receiving device enters into the active state or the on state to receive the retransmission transmitted on the reserved resource 1.

As shown in FIG. 9, the receiving device does not receive PSCCH/PSSCH on the reserved resource 1 (as shown in 2nd Tx in FIG. 9), and then the *drx-RetransmissionTimerSL* timer continues to run. As shown in FIG. 9, the transmitting device may perform reselection for the reserved resource 1, and the reselection resource (as shown in the reselected 2nd Tx in FIG. 9) is located after the reserved resource 1 (as shown in the 2nd Tx in FIG. 9).

The above exemplarily illustrate the first timer and the second timer, as well as the inactive or off state, active or on state of the receiving device of the embodiment of the present disclosure, but the present disclosure is not limited thereto.

In some embodiments, a slot where a resource, used for initial transmission, selected by the second terminal equipment is located is in an operational period of a third timer, and the third timer operates periodically and is used by the first terminal equipment for discontinuous reception (DRX).

For example, the third timer may be defined as *OnDurationTimer,* and the first terminal equipment is in the active state or the on state during the operation of *OnDurationTimer.* This disclosure is not limited thereto; for example, the third timer may also be other names or definitions.

For example, as shown in FIG. 9, the transmission resource 1 (as shown in the 1st Tx in FIG. 9) used by the transmitting device (Tx UE) to transmit the initial transmission is located during the operation of the third timer *OnDurationTimer.* The transmitting device may obtain the DRX configuration of the receiving device, thus ensuring that a slot where the first resource of the selected resources is located at least is within the operational period of the *OnDurationTimer* of the receiving device.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It can be seen from the above embodiments that, by receiving, by a receiving device, sidelink control information transmitted by a transmitting device, and performing discontinuous reception according to a reserved resource indicated in the sidelink control information, the sidelink DRX mechanism may be realized, so that the receiving device may receive retransmission data of the transmitting device, and power consumption may be saved.

Embodiments of the fourth aspect

Embodiments of this disclosure provide a sidelink discontinuous reception apparatus. The apparatus may be, for example, a terminal equipment (such as the first terminal equipment as described above) or one or some components or assemblies configured on a terminal equipment, with contents identical to those in the embodiments of the first aspect to the third aspect being not going to be described herein any further.

FIG. 10 is a schematic diagram of a sidelink discontinuous reception apparatus of an embodiment of this disclosure. As shown in FIG. 10, a sidelink discontinuous reception apparatus 1000 includes a receiving unit 1001 and a processing unit 1002.

In some embodiments, the receiving unit 1001 receives first sidelink control information transmitted by a second terminal equipment, the first sidelink control information indicating a reserved resource used for retransmission after a slot where the first sidelink control information is located, and the processing unit 1002, at a slot where the reserved resource is located, enable the first terminal equipment to be in an active state or an on state in a sidelink.

In some embodiments, the first terminal equipment is activated or started in the sidelink starting from a first symbol of the slot where the reserved resource is located, and the active state or the on state lasts for a slot or a plurality of continuous slots in a sidelink resource pool.

In some embodiments, from a first symbol in sidelink resource pool after a slot in which the first sidelink control information is received to a last symbol of a slot in sidelink resource pool prior to a slot where a reserved resource, used for next time of transmission, indicated in the first sidelink control information is located, the first terminal equipment may be in an inactive state or an off state in the sidelink.

In some embodiments, the first terminal equipment is an intended receiving terminal of the first sidelink control information and/or a corresponding physical sidelink shared channel, wherein, a destination identification indicated in the first sidelink control information is identical to an identification of the first terminal equipment, or a destination identification indicated in the first sidelink control information includes an identification of the first terminal equipment, or the first sidelink control information indicates traffics interested by the first terminal equipment.

In some embodiments, the processing unit 1002, for a sidelink process, starts a first timer from a first symbol of a first slot in sidelink resource pool after a slot where the first terminal equipment receives the first sidelink control information;

For example, the first timer is *drx-HARQ-RTT-TimerSL* and during the operation of *drx-HARQ-RTT-TimerSL,* the first terminal equipment may be in the inactive state or the off state in the sidelink.

In some embodiments, a value of the first timer is the number of slots, the number of slots being a total number of slots in a resource pool contained in a period from the first slot in sidelink resource pool after the slot where the terminal equipment receives the first sidelink control information to a slot in sidelink resource pool prior to a slot where a reserved resource, used for next time of transmission, indicated in the first sidelink control information is located. The value of the first timer is reduced by 1 for every slot in sidelink resource pool being passed; when the value of the first timer reaches 0, the first timer times out.

In some embodiments, the processing unit, for the sidelink process, starts a second timer and enables the first terminal equipment to enter into the active state or the on state at a next slot in sidelink resource pool after the first timer expires, in a case where the first sidelink control information indicates that a hybrid automatic retransmission request is disabled, or the first sidelink control information indicates that a hybrid automatic retransmission request is enabled and the first terminal equipment feeds back non-acknowledgement (NACK).

For example, the second timer is *drx-RetransmissionTimerSL,* and the first terminal equipment is in the active state or the on state in the sidelink during the operation of *drx-RetransmissionTimerSL.*

In some embodiments, the second timer is started at a first symbol of a first slot in sidelink resource pool after the first timer expires.

In some embodiments, the receiving unit 1001 receives the second sidelink control information in the active state or the on state, and the processing unit 1002 stops the second timer, in a case where the second sidelink control information is received and a destination identification and a source identification and a hybrid automatic retransmission request (HARQ) process identification indicated by the second sidelink control information are respectively identical to a destination identification and a source identification and a hybrid automatic retransmission request (HARQ) process identification indicated by the first sidelink control information.

In some embodiments, the first terminal equipment may be in or maintain the inactive state or the off state in the sidelink from a first symbol of a first slot in sidelink resource pool after the first timer expires, in a case where the first sidelink control information indicates that a hybrid automatic retransmission request is enabled, and the first terminal equipment feeds back acknowledgement.

In some embodiments, a slot where a resource, used for initial transmission, selected by the second terminal equipment is located is in an operational period of a third timer, and the third timer operates periodically and is used by the first terminal equipment for discontinuous reception;

For example, the third timer is *OnDurationTimer,* and the first terminal equipment is in the active state or the on state in the sidelink during the operation of *On-*

*DurationTimer.*

In some embodiments, the receiving unit 1001 receives first sidelink control information transmitted by a second terminal equipment, the first sidelink control information not indicating a reserved resource used for retransmission after a slot where the first sidelink control information is located, and the processing unit 1002, after the predetermined number of slots in the resource pool from receiving the first sidelink control information, enable the first terminal equipment to be in an active state or an on state in a sidelink.

In some embodiments, from a first symbol of a first slot in sidelink resource pool after a slot in which the first sidelink control information is received to a last symbol of the predetermined number of slots in sidelink resource pool after a slot where the first sidelink control information is located, the first terminal equipment may be in an inactive state or an off state in the sidelink.

In some embodiments, the processing unit 1002, for a sidelink process, starts a first timer from a first symbol of a first slot in sidelink resource pool after a slot where the first terminal equipment receives the first sidelink control information;

For example, the first timer is *drx-HARQ-RTT-TimerSL* and during the operation of *drx-HARQ-RTT-TimerSL,* the first terminal equipment may be in the inactive state or the off state in the sidelink.

In some embodiments, a value of the first timer is the number of slots, the number thereof being a predetermined number of slots in sidelink resource pool. The value of the first timer is reduced by 1 for every slot in sidelink resource pool being passed; when the value of the first timer reaches 0, the first timer times out.

In some embodiments, the processing unit 1002, for the sidelink process, starts a second timer and enables the first terminal equipment to enter into the active state or the on state at a first symbol of a next slot in sidelink resource pool after the first timer expires, in a case where the first sidelink control information indicates that a hybrid automatic retransmission request is disabled, or the first sidelink control information indicates that a hybrid automatic retransmission request is enabled and the first terminal equipment feeds back non-acknowledgement.

In some embodiments, the second timer is started at the first symbol of the first slot in resource pool after the first timer expires, and a value of the second timer is the number of a plurality of continuous slots in sidelink resource pool. The value of the second timer is reduced by 1 for every slot in sidelink resource pool being passed; when the value of the second timer reaches 0, the second timer times out.

In some embodiments, the processing unit 1002, for the sidelink process, does not start a second timer at a first symbol of a next slot in sidelink resource pool after the first timer expires, in a case where the first sidelink control information indicates that a hybrid automatic retransmission request is enabled, and the first terminal equipment feeds back acknowledgement.

In some embodiments, the processing unit 1002 determines whether to start the second timer according as sidelink control information in a physical sidelink shared channel to which the first sidelink control information corresponds indicates whether there exists retransmission or retransmission times.

In some embodiments, the processing unit 1002 determines whether to start the second timer, according to a priority and/or a channel busy ratio indicated by the first sidelink control information.

In some embodiments, the value of the second timer is determined according to the priority indicated by the first sidelink control information, and for different priorities, candidate values to which the second timer corresponds are different.

In some embodiments, the receiving unit 1001 receives third sidelink control information transmitted by a second terminal equipment, the third sidelink control information indicating a first reserved resource used for retransmission after a slot where the third sidelink control information is located, and the processing unit 1002, in a case where a corresponding physical sidelink control channel is not received on the first reserved resource, starting from a first symbol of a first slot in a sidelink resource pool after a slot where the first reserved resource is located, enables the first terminal equipment to be in an active state or an on state at a plurality of continuous slots in the sidelink resource pool.

In some embodiments, the processing unit 1002, for a sidelink process, further starts a second timer at a first symbol in a sidelink resource pool after a current slot.

In some embodiments, in a case where the first terminal equipment learns that there exists a second reserved resource used for the retransmission after the first reserved resource, the number of the second timers is a total number of slots in a resource pool contained in a period from a first slot in sidelink resource pool after a slot where the first terminal equipment receives the first sidelink control information to a slot where the second reserved resource is located in the sidelink resource pool. The value of the second timer is reduced by 1 for every slot in sidelink resource pool being passed; when the value of the second timer reaches 0, the second timer times out.

In some embodiments, in a case where the first terminal equipment learns that there exists no second reserved resource used for the retransmission after the first reserved resource or the first terminal equipment does not know subsequent resources, a value of the second timer is a predetermined number of slots in a sidelink resource pool. The value of the second timer is reduced by 1 for every slot in sidelink resource pool being passed; when the value of the second timer reaches 0, the second timer times out.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto. The sidelink discontinuous reception apparatus 1000 may further include other components or modules, and reference may be made to the related techniques for specific contents of these components or modules.

Furthermore, for the sake of simplicity, connection relationships between the components or modules or signal profiles thereof are only illustrated in FIG. 10. However, it should be understood by those skilled in the art that such related techniques as bus connection may be adopted. And the above components or modules may be implemented by hardware, such as a processor, a memory, a transmitter, and a receiver, which are not limited in the embodiment of this disclosure.

It can be seen from the above embodiments that, by receiving, by a receiving device, sidelink control information transmitted by a transmitting device, and performing discontinuous reception according to a reserved resource indicated in the sidelink control information, the sidelink DRX mechanism may be realized, so that the receiving device may receive retransmission data of the transmitting device, and power consumption may be saved.

Embodiments of the fifth aspect

The embodiments of this disclosure further provide a communications system, and reference may be made to FIG. 1, with contents identical to those in the embodiments of the first to the fourth aspects being not going to be described herein any further.

In some embodiments, the communications system 100 may at least include:

a first terminal equipment 102 configured to receive first sidelink control information, the first sidelink control information indicating a reserved resource used for retransmission after a slot where the first sidelink control information is located, and be in an active state or an on state in a sidelink at a slot where the reserved resource is located; and
a second terminal equipment 103 configured to transmit the first sidelink control information.

In some embodiments, the communications system 100 may at least include:

a first terminal equipment 102 configured to receive first sidelink control information, the first sidelink control information not indicating a reserved resource used for retransmission after a slot where the first sidelink control information is located, and be in an active state or an on state in a sidelink after the predetermined number of slots in a resource pool from receiving the first sidelink control information; and
a second terminal equipment 103 configured to transmit the first sidelink control information.

In some embodiments, the communications system 100 may at least include:

a first terminal equipment 102 configured to receive third sidelink control information, the third sidelink control information indicating a first reserved resource used for retransmission after a slot where the third sidelink control information is located, and in a case where a corresponding physical sidelink control channel is not received on the first reserved resource, starting from a first symbol of a first slot in a sidelink resource pool after a slot where the first reserved resource is located, be in an active state or an on state at a plurality of continuous slots in the sidelink resource pool; and
a second terminal equipment 103 configured to transmit the third sidelink control information.

The embodiment of this disclosure further provides a network device, such as a base station; however, this disclosure is not limited thereto, and it may also be other network devices.

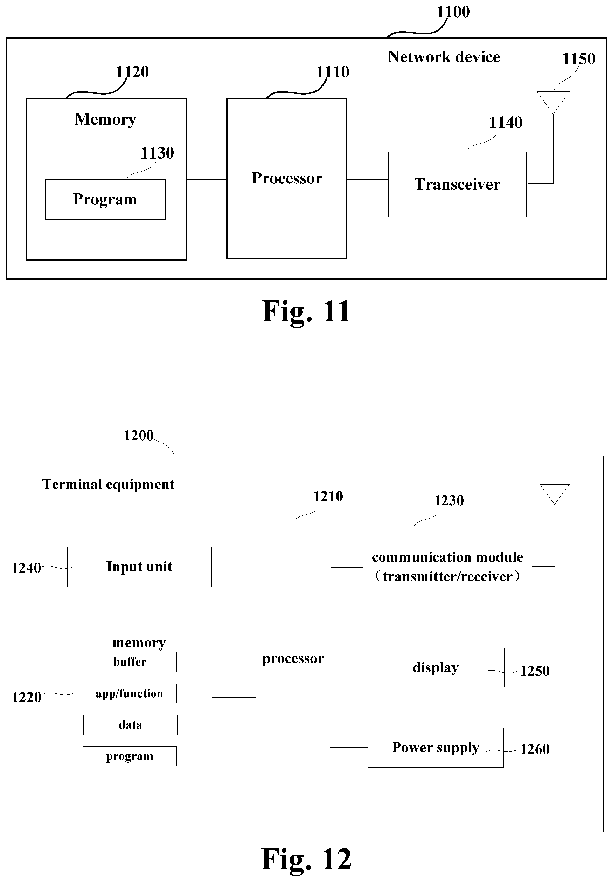

FIG. 11 is a schematic diagram of the composition of a network device of an embodiment of this disclosure. As shown in FIG. 11, a network device 1100 may include a processor 1110 (such as a central processing unit (CPU)) and a memory 1120, the memory 1120 being coupled to the processor 1110. The memory 1120 may store various data, and furthermore, it may store a program 1130 for data processing, and execute the program 1130 under control of the processor 1110.

Furthermore, as shown in FIG. 11, the network device 1100 may further include a transceiver 1140, and an antenna 1150, etc. Functions of the above components are similar to those in the relevant art, and shall not be described herein any further. It should be noted that the network device 1100 does not necessarily include all the parts shown in FIG. 11, and furthermore, the network device 1100 may include parts not shown in FIG. 11, and the related art may be referred to.

The embodiment of this disclosure further provides a terminal equipment; however, this disclosure is not limited thereto, and it may also be another equipment.

FIG. 12 is a schematic diagram of a terminal equipment of an embodiment of this disclosure. As shown in FIG. 12, a terminal equipment 1200 may include a processor 1210 and a memory 1220, the memory 1220 storing data and a program and being coupled to the processor 1210. It should be noted that this figure is illustrative only, and other types of structures may also be used, so as to supplement or replace this structure and achieve a telecommunications function or other functions.

For example, the processor 1210 may be configured to execute a program to carry out the sidelink discontinuous reception method as described in the embodiment of the first aspect. For example, the processor 1210 may be configured to perform the following control: receiving first sidelink control information, the first sidelink control information indicating a reserved resource used for retransmission after a slot where the first sidelink control information is located, and enabling the first terminal equipment to be in an active state or an on state in a sidelink at a slot where the reserved resource is located.

For another example, the processor 1210 may be configured to execute a program to carry out the sidelink discontinuous reception method as described in the embodiment of the second aspect. For example, the processor 1210 may be configured to perform the following control: receiving first sidelink control information, the first sidelink control information not indicating a reserved resource used for retransmission after a slot where the first sidelink control information is located, and enabling the first terminal equipment to be in an active state or an on state in a sidelink after the predetermined number of slots in a resource pool from receiving the first sidelink control information.

For another example, the processor 1210 may be configured to execute a program to carry out the sidelink discontinuous reception method as described in the embodiment of the third aspect. For example, the processor 1210 may be configured to perform the following control: receiving third sidelink control information, the third sidelink control information indicating a first reserved resource used for retransmission after a slot where the third sidelink control information is located, and in a case where a corresponding physical sidelink control channel is not received on the first reserved resource, starting from a first symbol of a first slot in a sidelink resource pool after a slot where the first reserved resource is located, enabling the first terminal equipment to be in an active state or an on state at a plurality of continuous slots in the sidelink resource pool.

As shown in FIG. 12, the terminal equipment 1200 may further include a communications module 1230, an input unit 1240, a display 1250, and a power supply 1260. Functions of the above components are similar to those in the related art, which shall not be described herein any further. It should be noted that the terminal equipment 1200 does not necessarily include all the parts shown in FIG. 12, and the above components are not necessary; furthermore, the terminal equipment 1200 may include parts not shown in FIG. 12, and the related art may be referred to.

An embodiment of this disclosure provides a computer readable program, which, when executed in a terminal equipment, causes the terminal equipment to carry out the sidelink discontinuous reception methods as described in the embodiments of the first to the third aspects.

An embodiment of this disclosure provides a computer storage medium, including a computer readable program, which causes a terminal equipment to carry out the sidelink discontinuous reception methods as described in the embodiments of the first to the third aspects.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present invention. Various variants and modifications may be made by those skilled in the art according to the principle of the present invention, and such variants and modifications fall within the scope of the present invention.

As to implementations containing the above embodiments, following supplements are further disclosed.

Supplement 1. A sidelink discontinuous reception method, including:

receiving, by a first terminal equipment, first sidelink control information transmitted by a second terminal equipment, the first sidelink control information indicating a reserved resource used for retransmission after a slot where the first sidelink control information is located; and
being, by the first terminal equipment, in an active state or an on state in a sidelink at a slot where the reserved resource is located.

Supplement 2. The method according to supplement 1, wherein the first terminal equipment is activated or started in the sidelink starting from a first symbol of the slot where the reserved resource is located, and the active state or the on state lasts for a slot or a plurality of continuous slots in a sidelink resource pool.

Supplement 3. The method according to supplement 1 or 2, wherein the method further includes:
being, by the first terminal equipment, in an inactive state or an off state in the sidelink, from a first symbol in sidelink resource pool after a slot in which the first sidelink control information is received to a last symbol of a slot in sidelink resource pool prior to a slot where a reserved resource, used for next time of transmission, indicated in the first sidelink control information is located.

Supplement 4. The apparatus according to any one of claims 1-3, wherein the first terminal equipment is an intended receiving terminal of the first sidelink control information and/or a corresponding physical sidelink shared channel (PSSCH).

Supplement 5. The method according to supplement 4, wherein a destination identification indicated in the first sidelink control information is identical to an identification of the first terminal equipment, or a destination identification indicated in the first sidelink control information comprises an identification of the first terminal equipment, or the first sidelink control information indicates traffics interested by the first terminal equipment.

Supplement 6. The method according to supplement 3, wherein the first terminal equipment, for a sidelink process, starts a first timer from a first symbol of a first slot in sidelink resource pool after a slot where the first terminal equipment receives the first sidelink control information.

Supplement 7. The method according to supplement 6, wherein the first timer is *drx-HARQ-RTT-TimerSL* and during the operation of *drx-HARQ-RTT-TimerSL,* the first terminal equipment is in an inactive state or an off state in the sidelink.

Supplement 8. The method according to supplement 6, wherein a value of the first timer is the number of slots, the number of slots being a total number of slots in a resource pool contained in a period from the first slot in sidelink resource pool after the slot where the first terminal equipment receives the first sidelink control information to a slot in sidelink resource pool prior to a slot where a reserved resource, used for next time of transmission, indicated in the first sidelink control information is located;
and the value of the first timer is reduced by 1 for every slot in sidelink resource pool being passed.

Supplement 9. The method according to any one of supplements 6-8, wherein the method further includes:
starting, by the first terminal equipment, for the sidelink process, a second timer and entering into the active state or the on state at a first symbol of a first slot in sidelink resource pool after the first timer expires, in a case where the first sidelink control information indicates that a hybrid automatic retransmission request is disabled, or the first sidelink control information indicates that a hybrid automatic retransmission request is enabled and the first terminal equipment feeds back non-acknowledgement (NACK).

Supplement 10. The method according to supplement 9, wherein the second timer is *drx-RetransmissionTimerSL,* and the first terminal equipment is in the active state or the on state in the sidelink during the operation of *drx-RetransmissionTimerSL.*

Supplement 11. The method according to supplement 9 or 10, wherein a value of the second timer is reduced by 1 for every slot in sidelink resource pool being passed.

Supplement 12. The method according to any one of supplements 9-11, wherein a value of the second timer is 1.

Supplement 13. The method according to any one of supplements 9-11, wherein the method further includes:

receiving, by the first terminal equipment, second sidelink control information in the active state or the on state; and
stopping the second timer, in a case where the second sidelink control information is received and a destination identification and a source identification and a hybrid automatic retransmission request (HARQ) process identification indicated by the second sidelink control information are respectively identical to a destination identification and a source identification and a hybrid automatic retransmission request (HARQ) process identification indicated by the first sidelink control information.

Supplement 14. The method according to any one of supplements 6-8, wherein the method further includes:
being in (maintaining), by the first terminal equipment, the inactive state or the off state in the sidelink from a first symbol of a first slot in sidelink resource pool after the first timer expires, in a case where the first sidelink control information indicates that a hybrid automatic retransmission (HARQ) request is enabled, and the first terminal equipment feeds back acknowledgement (ACK).

Supplement 15. The method according to supplement 14, wherein the second timer is not started at a first symbol in sidelink resource pool after the first timer expires.

Supplement 16. The method according to any one of supplements 1-15, wherein a slot where a resource, used for initial transmission, selected by the second terminal equipment is located is in an operational period of a third timer, and the third timer operates periodically and is used by the first terminal equipment for discontinuous reception (DRX).

Supplement 17. The method according to supplement 16, wherein the third timer is *OnDurationTimer*, and the first terminal equipment is in the active state or the on state in the sidelink during the operation of *OnDurationTimer*.

Supplement 18. A sidelink discontinuous reception method, including:

receiving, by a first terminal equipment, first sidelink control information transmitted by a second terminal equipment, the first sidelink control information not indicating a reserved resource used for retransmission after a slot where the first sidelink control information is located; and
being, by the first terminal equipment, in an active state or an on state in a sidelink after the predetermined number of slots in a resource pool from receiving the first sidelink control information.

Supplement 19. The method according to supplement 18, wherein the method further includes:
being, by the first terminal equipment, in an inactive state or an off state in the sidelink, from a first symbol of a first slot in sidelink resource pool after a slot in which the first sidelink control information is received to a last symbol of the predetermined number of slots in sidelink resource pool after a slot where the first sidelink control information is located.

Supplement 20. The method according to supplement 18 or 19, wherein the first terminal equipment is an intended receiving terminal of the first sidelink control information and/or a corresponding physical sidelink shared channel (PSSCH).

Supplement 21. The method according to supplement 20, wherein a destination identification indicated in the first sidelink control information is identical to an identification of the first terminal equipment, or a destination identification indicated in the first sidelink control information comprises an identification of the first terminal equipment, or the first sidelink control information indicates traffics interested by the first terminal equipment.

Supplement 22. The method according to supplement 19, wherein the first terminal equipment, for a sidelink process, starts a first timer from a first symbol of a first slot in sidelink resource pool after a slot where the first terminal equipment receives the first sidelink control information.

Supplement 23. The method according to supplement 22, wherein the first timer is *drx-HARQ-RTT-TimerSL* and during the operation of *drx-HARQ-RTT-TimerSL*, the first terminal equipment is in an inactive state or an off state in the sidelink.

Supplement 24. The method according to supplement 22, wherein a value of the first timer is the number of slots, the number thereof being a predetermined number of slots in sidelink resource pool; and the value of the first timer is reduced by 1 for every slot in sidelink resource pool being passed.

Supplement 25. The method according to supplement 24, wherein the predetermined number slots in the sidelink resource pool is 31.

Supplement 26. The method according to any one of supplements 22-25, wherein the method further includes:
starting, by the first terminal equipment, for the sidelink process, a second timer and entering into the active state or the on state at a first symbol of a first slot in sidelink resource pool after the first timer expires, in a case where the first sidelink control information indicates that a hybrid automatic retransmission request is disabled, or the first sidelink control information indicates that a hybrid automatic retransmission request is enabled and the first terminal equipment feeds back non-acknowledgement (NACK).

Supplement 27. The method according to supplement 26, wherein the second timer is *drx-RetransmissionTimerSL*, and the first terminal equipment is in the active state or the on state in the sidelink during the operation of *drx-RetransmissionTimerSL*.

Supplement 28. The method according to supplement 26 or 27, wherein the second timer is started at the first symbol of the first slot in resource pool after the first timer expires, a value of the second timer being the number of a plurality of continuous slots in sidelink resource pool, and the value of the second timer is reduced by 1 for every slot in sidelink resource pool being passed.

Supplement 29. The method according to any one of supplements 26-28, wherein the method further includes:

determining, by the first terminal equipment, whether to start the second timer according as sidelink control information (2nd stage SCI) in a physical sidelink shared channel (PSSCH) to which the first sidelink control information corresponds indicates whether there exists retransmission or retransmission times.

Supplement 30. The method according to any one of supplements 26-28, wherein the method further includes:

determining, by the first terminal equipment, whether to start the second timer according to a priority and/or a channel busy ratio (CBR) indicated by the first sidelink control information.

Supplement 31. The method according to supplement 30, wherein a value of the second timer is determined according to the priority indicated by the first sidelink control information.

Supplement 32. The method according to supplement 31, wherein, for different priorities, candidate values to which the second timer corresponds are different.

Supplement 33. The method according to any one of supplements 26-32, wherein the method further includes:

receiving, by the first terminal equipment, second sidelink control information in the active state or the on state; and
stopping the second timer, in a case where the second sidelink control information is received and a destination identification and a source identification and a hybrid automatic retransmission request (HARQ) process identification indicated by the second sidelink control information are respectively identical to a destination identification and a source identification and a hybrid automatic retransmission request (HARQ) process identification indicated by the first sidelink control information.

Supplement 34. The method according to any one of supplements 22-25, wherein the method further includes:

maintaining, by the first terminal equipment, the inactive state or the off state in the sidelink from a first symbol of a first slot in sidelink resource pool after the first timer expires, in a case where the first sidelink control information indicates that a hybrid automatic retransmission (HARQ) request is enabled, and the first terminal equipment feeds back acknowledgement (ACK).

Supplement 35. The method according to supplement 34, wherein the second timer is not started at a first symbol of a first slot in sidelink resource pool after the first timer expires.

Supplement 36. The method according to any one of supplements 18-35, wherein a slot where a resource, used for initial transmission, selected by the second terminal equipment is located is in an operational period of a third timer, and the third timer operates periodically and is used by the first terminal equipment for discontinuous reception (DRX).

Supplement 37. The method according to supplement 36, wherein the third timer is *OnDurationTimer,* and the first terminal equipment is in the active state or the on state during the operation of *OnDurationTimer.*

Supplement 38. A sidelink discontinuous reception method, including:

receiving, by a first terminal equipment, third sidelink control information transmitted by a second terminal equipment, the third sidelink control information indicating a first reserved resource used for retransmission after a slot where the third sidelink control information is located; and
being, by the first terminal equipment, in an active state or an on state at a plurality of continuous slots in the sidelink resource pool starting from a first symbol of a first slot in a sidelink resource pool after a slot where the first reserved resource is located, in a case where a corresponding physical sidelink control channel (PSCCH) is not received on the first reserved resource.

Supplement 39. The method according to supplement 38, wherein the first terminal equipment is an intended receiving terminal of the third sidelink control information and/or a corresponding physical sidelink shared channel (PSSCH).

Supplement 40. The method according to supplement 39, wherein a destination identification indicated in the third sidelink control information is identical to an identification of the first terminal equipment, or a destination identification indicated in the first sidelink control information comprises an identification of the first terminal equipment, or the third sidelink control information indicates traffics interested by the first terminal equipment.

Supplement 41. The method according to any one of supplements 38-40, wherein the first terminal equipment, for a sidelink process, further starts a second timer at a first symbol in a sidelink resource pool after a current slot.

Supplement 42. The method according to supplement 41, wherein the second timer is *drx-RetransmissionTimer SL*, and the first terminal equipment is in the active state or the on state during the operation of *drx-RetransmissionTimerSL.*

Supplement 43. The method according to supplement 41, wherein in a case where the first terminal equipment learns that there exists a second reserved resource used for the retransmission after the first reserved resource, a value of the second timer is a total number of slots in a resource pool contained in a period from a first slot in sidelink resource pool after a slot where the first terminal equipment receives the first sidelink control information to a slot where the second reserved resource is located in the sidelink resource pool; and a value of the second timer is reduced by 1 for every slot in sidelink resource pool being passed.

Supplement 44. The method according to supplement 41, wherein in a case where the first terminal equipment learns that there exists no second reserved resource used for the retransmission after the first reserved resource or the first terminal equipment does not know subsequent resources, a value of the second timer is a predetermined number of slots in a sidelink resource pool; and a value of the second timer is reduced by 1 for every slot in sidelink resource pool being passed.

Supplement 45. The method according to supplement 44, wherein the predetermined number slots in the sidelink resource pool is 31.

Supplement 46. The method according to supplement 41, wherein a value of the second timer is determined according to the priority indicated by the third sidelink control information.

Supplement 47. The method according to any one of supplements 38-46, wherein the method further includes:

receiving, by the first terminal equipment, fourth sidelink control information in the active state or the on state; and
stopping the second timer, in a case where the fourth sidelink control information is received and a destination identification and a source identification and a hybrid automatic retransmission request (HARQ) process identification indicated by the fourth sidelink control information are respectively identical to a destination identification and a source identification and a hybrid automatic retransmission request (HARQ) process identification indicated by the third sidelink control information.

Supplement 48. The method according to any one of supplements 38-47, wherein a slot where a resource, used for initial transmission, selected by the second terminal equipment is located is in an operational period of a third timer, and the third timer operates periodically and is used by the first terminal equipment for discontinuous reception (DRX).

Supplement 49. The method according to supplement 48, wherein the third timer is *OnDurationTimer,* and the first terminal equipment is in the active state or the on state in the sidelink during the operation of *OnDurationTimer.*

Supplement 50. The method according to any one of supplements 38-49, wherein a reselected resource obtained by the second terminal equipment reselecting for the first reserved resource is located after the first reserved resource.

Supplement 51. A terminal equipment, including a memory and a processor, the memory storing a computer program, and the processor being configured to execute the computer program to carry out the sidelink discontinuous reception method as described in any one of supplements 1-50.

Supplement 52. A communications system, including:

a first terminal equipment configured to receive first sidelink control information, the first sidelink control information indicating a reserved resource used for retransmission after a slot where the first sidelink control information is located, and be in an active state or an on state in a sidelink at a slot where the reserved resource is located; and
a second terminal equipment configured to transmit the first sidelink control information.

Supplement 53. A communications system, including:

a first terminal equipment configured to receive first sidelink control information, the first sidelink control information not indicating a reserved resource used for retransmission after a slot where the first sidelink control information is located, and be in an active state or an on state in a sidelink after the predetermined number of slots in a resource pool from receiving the first sidelink control information; and
a second terminal equipment configured to transmit the first sidelink control information.

Supplement 54. A communications system, including:

a first terminal equipment configured to receive third sidelink control information, the third sidelink control information indicating a first reserved resource used for retransmission after a slot where the third sidelink control information is located, and in a case where a corresponding physical sidelink control channel is not received on the first reserved resource, starting from a first symbol of a first slot in a sidelink resource pool after a slot where the first reserved resource is located, be in an active state or an on state at a plurality of continuous slots in the sidelink resource pool; and
a second terminal equipment configured to transmit the third sidelink control information.

**Claims**

1. A sidelink discontinuous reception (DRX) apparatus, configured in a first terminal equipment, the apparatus comprising:

a receiver configured to receive first sidelink control information transmitted by a second terminal equipment, the first sidelink control information indicating a reserved resource used for retransmission after a slot where the first sidelink control information is located; and

a processor configured to, at a slot where the reserved resource is located, enable the first terminal equipment to be in an active state or an on state in a sidelink.

2. The apparatus according to claim 1, wherein the first terminal equipment is activated or started in the sidelink starting from a first symbol of the slot where the reserved resource is located, and the active state or the on state lasts for a slot or a plurality of continuous slots in a sidelink resource pool.

3. The apparatus according to claim 1, wherein the first terminal equipment is an intended receiving terminal of the first sidelink control information and/or a corresponding physical sidelink shared channel, wherein a destination identification indicated in the first sidelink control information is identical to an identification of the first terminal equipment, or a destination identification indicated in the first sidelink control information comprises an identification of the first terminal equipment, or the first sidelink control information indicates traffics interested by the first terminal equipment.

4. The apparatus according to claim 1, wherein the processor, for a sidelink process, starts a first timer from a first slot in sidelink resource pool after a slot where the first terminal equipment receives the first sidelink control information.

5. The apparatus according to claim 4, wherein the processor, for the sidelink process, starts a second timer and makes the first terminal equipment enter into the active state or the on state atthe first slot in the sidelink resource pool after the first timer expires, in a case where the first sidelink control information indicates that a hybrid automatic retransmission request is disabled, or the first sidelink control information indicates that a hybrid automatic retransmission request is enabled and the first terminal equipment feeds back non-acknowledgement.

6. The apparatus according to claim 5, wherein the receiver further receives second sidelink control information in the active state or the on state; and the processor stops the second timer, in a case where the second sidelink control information is received and a destination identification and a source identification and a hybrid automatic retransmission request process identification indicated by the second sidelink control information are respectively identical to a destination identification and a source identification and a hybrid automatic retransmission request process identification indicated by the first sidelink control information.

7. The apparatus according to claim 1, wherein a slot where a resource, used for initial transmission, selected by the second terminal equipment is located is in an operational period of a third timer, and the third timer operates periodically and is used by the first terminal equipment for discontinuous reception.

8. The apparatus according to claim 1, wherein a reselected resource obtained by the second terminal equipment reselecting for a first reserved resource is located after the first reserved resource, when the first reserved resource is pre-empted.

9. A sidelink discontinuous reception (DRX) apparatus, configured in a first terminal equipment, the apparatus comprising:

a receiver configured to receive first sidelink control information transmitted by a second terminal equipment, the first sidelink control information not indicating a reserved resource used for retransmission after a slot where the first sidelink control information is located; and

a processor configured to, after the predetermined number of slots in a resource pool from receiving the first sidelink control information, enable the first terminal equipment to be in an active state or an on state in a sidelink.

10. The apparatus according to claim 9, wherein the processor, for a sidelink process, starts a first timer from a first slot in sidelink resource pool after a slot where the first terminal equipment receives the first sidelink control information, a value of the first timer being a predetermined number 31 of slots in a sidelink resource pool.

11. The apparatus according to claim 10, wherein the processor, for the sidelink process, starts a second timer and makes the first terminal equipment enter into the active state or the on state at a first symbol of a next slot in sidelink resource pool after the first timer expires, in a case where the first sidelink control information indicates that a hybrid automatic retransmission request is disabled, or the first sidelink control information indicates that a hybrid automatic retransmission request is enabled and the first terminal equipment feeds back non-acknowledgement; a value of the second timer being the number of a plurality of continuous slots in a sidelink resource pool.

12. The apparatus according to claim 11, wherein,

the processor starts the second timer according as second-stage sidelink control information in a physical sidelink shared channel to which the first sidelink control information corresponds indicates that there exists subsequent retransmission; or

determine whether to start the second timer, according to a priority and/or a channel busy ratio indicated by the first sidelink control information.

13. The apparatus according to claim 12, wherein the value of the second timer is determined according to the priority indicated by the first sidelink control information, and for different priorities, candidate values to which the second timer corresponds are different.

14. A sidelink discontinuous reception (DRX) apparatus, configured in a first terminal equipment, the apparatus comprising:

a receiver configured to receive third sidelink control information transmitted by a second terminal equipment, the third sidelink control information indicating a first reserved resource used for retransmission after a slot where the third sidelink control information is located; and
a processor configured to, in a case where a corresponding physical sidelink control channel is not received on the first reserved resource, starting from a first slot in a sidelink resource pool after a slot where the first reserved resource is located, enable the first terminal equipment to be in an active state or an on state at a plurality of continuous slots in the sidelink resource pool.

15. The apparatus according to claim 14, wherein the processor, for a sidelink process, further starts a second timer at a first symbol in a sidelink resource pool after a current slot.

100

101

103

102

## Fig. 1

201

a first terminal equipment receives first sidelink control
information transmitted by a second terminal equipment, the
first sidelink control information indicating a reserved resource
used for retransmission after a slot where the first sidelink
control information is located

202

the first terminal equipment, at a slot where the reserved
resource is located, is in an active state or an on state in a sidelink

## Fig. 2

Fig. 3

Fig. 4

501

a first terminal equipment receives first sidelink control information transmitted by a second terminal equipment, the first sidelink control information not indicating a reserved resource used for retransmission after a slot where the first sidelink control information is located

502

the first terminal equipment, after the predetermined number of slots in a resource pool from receiving the first sidelink control information, is in an active state or an on state in a sidelink

**Fig. 5**

transmission resources selected by transmitting device

receiving device

31 slots

3rd Tx

31 slots

2nd Tx

1st Tx

OnDuration

On

Second timer

First timer

t

**Fig. 6**

transmission
resources selected by
transmitting device

|←—————31 slots—————→|
|←——31 slots——→|

3rd Tx

1st Tx          2nd Tx

receiving
device

|◄OnDuration►|          On

ACK

|◄——————First timer——————►|

t

## Fig. 7

801

a first terminal equipment receives third sidelink control
information transmitted by a second terminal equipment, the
third sidelink control information indicating a first reserved
resource used for retransmission after a slot where the third
sidelink control information is located

802

the first terminal equipment, in a case where a corresponding
PSCCH is not received on the first reserved resource, starting
from a first symbol of a first slot in a sidelink resource pool after
a slot where the first reserved resource is located, is in an active
state or an on state at a plurality of continuous slots in the
sidelink resource pool

## Fig. 8

**Fig. 9**

**Fig. 10**

1100

Network device                1150

1120                    1110

Memory                      1140

1130

Program        Processor        Transceiver

## Fig. 11

1200

Terminal equipment

1210                1230

1240    Input unit        communication module
                          （transmitter/receiver）

        memory

        buffer

1220    app/function      processor        display        1250

        data

        program                          Power supply    1260

## Fig. 12

## INTERNATIONAL SEARCH REPORT

| International application No. |
|---|
| **PCT/CN2020/123006** |

**A. CLASSIFICATION OF SUBJECT MATTER**

H04W 76/28(2018.01)i

According to International Patent Classification (IPC) or to both national classification and IPC

**B. FIELDS SEARCHED**

Minimum documentation searched (classification system followed by classification symbols)

H04W; H04L; H04B

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 边链路, 侧链路, 侧行链路, 旁链路, 非连续接收, 重传, 预留, 资源, 控制, 信息, 终端, 时隙, 激活, 开启, 信道, 标识, 业务, sidelink, DRX, retransmission, HARQ, reserve, resource, control, message, terminal, UE, timeslot, activate, channel, identifier, traffic

**C. DOCUMENTS CONSIDERED TO BE RELEVANT**

| Category* | Citation of document, with indication, where appropriate, of the relevant passages | Relevant to claim No. |
|---|---|---|
| X | CN 111800894 A (VIVO COMMUNICATION TECHNOLOGY CO., LTD.) 20 October 2020 (2020-10-20)<br>    description paragraphs [0033]-[0127] | 1-3, 9, 10 |
| A | CN 111800894 A (VIVO COMMUNICATION TECHNOLOGY CO., LTD.) 20 October 2020 (2020-10-20)<br>    description paragraphs [0033]-[0127] | 4-8, 11-20 |
| X | CN 111800764 A (VIVO COMMUNICATION TECHNOLOGY CO., LTD.) 20 October 2020 (2020-10-20)<br>    description, paragraphs [0043]-[0079] | 1-3, 9, 10 |
| A | CN 111800764 A (VIVO COMMUNICATION TECHNOLOGY CO., LTD.) 20 October 2020 (2020-10-20)<br>    description, paragraphs [0043]-[0079] | 4-8, 11-20 |
| A | CN 111556590 A (CHINA ACADEMY OF INFORMATION AND COMMUNICATIONS TECHNOLOGY) 18 August 2020 (2020-08-18)<br>    entire document | 1-20 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 July 2021** | **21 July 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/123006**

| C. | DOCUMENTS CONSIDERED TO BE RELEVANT | |
|---|---|---|
| Category* | Citation of document, with indication, where appropriate, of the relevant passages | Relevant to claim No. |
| A | WO 2018016882 A1 (SAMSUNG ELECTRONICS CO., LTD.) 25 January 2018 (2018-01-25) <br> entire document | 1-20 |
| A | US 2019098689 A1 (FG INNOVATION IP COMPANY LIMITED) 28 March 2019 (2019-03-28) <br> entire document | 1-20 |

Form PCT/ISA/210 (second sheet) (January 2015)

**INTERNATIONAL SEARCH REPORT**
**Information on patent family members**

International application No.

**PCT/CN2020/123006**

| Patent document cited in search report | | | Publication date (day/month/year) | Patent family member(s) | | | Publication date (day/month/year) |
|---|---|---|---|---|---|---|---|
| CN | 111800894 | A | 20 October 2020 | WO | 2021032194 | A1 | 25 February 2021 |
| CN | 111800764 | A | 20 October 2020 | WO | 2021031938 | A1 | 25 February 2021 |
| CN | 111556590 | A | 18 August 2020 | None | | | |
| WO | 2018016882 | A1 | 25 January 2018 | DE | 112017003646 | T5 | 04 April 2019 |
| | | | | CN | 109479189 | A | 15 March 2019 |
| US | 2019098689 | A1 | 28 March 2019 | TW | 201922040 | A | 01 June 2019 |
| | | | | EP | 3689067 | A1 | 05 August 2020 |
| | | | | CN | 111096026 | A | 01 May 2020 |
| | | | | KR | 20200052366 | A | 14 May 2020 |
| | | | | JP | 2021500777 | A | 07 January 2021 |
| | | | | WO | 2019062827 | A1 | 04 April 2019 |
| | | | | US | 2020413475 | A1 | 31 December 2020 |

Form PCT/ISA/210 (patent family annex) (January 2015)